# EUROPÄISCHE PATENTSCHRIFT

(11) **EP 4 360 915 B1**
(45) Veröffentlichungstag und Bekanntmachung des Hinweises auf die Patenterteilung: **21.05.2025**
(21) Anmeldenummer: 23203242.5
(22) Anmeldetag: 12.10.2023
(51) Int. Cl.: B60C 11/03, B60C 11/12

(54) **FAHRZEUGLUFTREIFEN**
PNEUMATIC TYRE FOR VEHICLES
BANDAGE PNEUMATIQUE POUR VÉHICULE

(30) Priorität: 26.10.2022 DE 102022211337
(43) Veröffentlichungstag der Anmeldung: 01.05.2024
(73) Patentinhaber: Continental Reifen Deutschland GmbH, 30175 Hannover (DE)
(72) Erfinder: Heinhaupt, Torsten, 30165 Hannover (DE); Bauer, Claudia, 30165 Hannover (DE); Fuchs, Artur, 30165 Hannover (DE); Brandau, Christian, 30165 Hannover (DE); Brockmann, Jürgen, 30165 Hannover (DE); Subramanian Sivanarutchelvi, Manickaraj, 30165 Hannover (DE); Seng, Matthias, 30165 Hannover (DE); Sissel, Patrick, 30165 Hannover (DE)
(74) Vertreter: Continental Corporation

(56) Entgegenhaltungen:
- WO-A1-2023/274469
- DE-A1- 102005 030 566
- DE-A1- 102010 001 226
- US-A1- 2017 066 290

## Beschreibung

Die Erfindung betrifft einen Fahrzeugluftreifen mit einem Laufstreifen mit von Rillen begrenzten mittleren Profilblöcken mit jeweils zumindest einem durchquerenden, den jeweiligen mittleren Profilblock in Blocksegmente gliedernden Einschnitt, welcher eine Breite von 0,4 mm bis 1,2 mm und zumindest in einem in Draufsicht über einen Teil des Einschnitts reichenden Einschnittbereich eine maximale Tiefe von 70% bis 100% der Profiltiefe aufweist, wobei mittlere Profilblöcke vorgesehen sind, in welchen jeweils zumindest eine in Draufsicht linienförmige Einschnittabfolge aus zumindest zwei miteinander fluchtend verlaufenden Zusatzeinschnitten mit einer Breite von 0,4 mm bis 1,2 mm ausgebildet ist, wobei die zur selben Einschnittabfolge gehörenden Zusatzeinschnitte in unmittelbar benachbarten Blocksegmenten ausgebildet sind und wobei die Zusatzeinschnitte relativ zum im selben mittleren Profilblock befindlichen Einschnitt unter Supplementwinkeln verlaufen, welche von 90° um bis zu 40° abweichen.

Ein derartiger Fahrzeugluftreifen ist beispielsweise aus der DE 10 2020 214 363 A1 bekannt. Der Laufstreifen des Fahrzeugluftreifens weist zu Profilblockreihen gehörende mittlere Profilblöcke und schulterseitige Profilblöcke auf. In den Profilblöcken sind jeweils parallel zu den Blockkanten verlaufende Einschnitte mit einer Breite von 0,4 mm bis 0,8 mm und einer maximalen Tiefe von 75% bis 100% der Profiltiefe sowie in linienförmig verlaufenden Einschnittabfolgen angeordnete Zusatzeinschnitte ("Mikrorillen") mit einer Breite und einer Tiefe von jeweils 0,3 mm bis 0,6 mm ausgebildet. Die Einschnitte schließen mit den Zusatzeinschnitten Supplementwinkel ein, welche von 90° um zirka 35° abweichen. Der Reifen soll eine gleichermaßen verbesserte Trocken-, Nässe- und Schneeperformance aufweisen.

Aus der DE 10 2010 001 226 A1 ist ein Fahrzeugluftreifen mit einem Laufstreifen mit von Umfangsrillen und Querrillen begrenzten, mittleren und schulterseitigen Profilblöcken bekannt, wobei eine der Umfangsrillen gerade und entlang der Reifenäquatorialebene verläuft. Die Querrillen weisen einen randseitigen Rillenabschnitt mit einer Tiefe von 40% bis 60% der maximalen Tiefe der Querrille und eine Breite von 30% bis 50% der maximalen Breite der Querrille auf. In den Profilblöcken, welche an die entlang der Reifenäquatorialebene verlaufende Umfangsrille angrenzen, sind vorzugsweise jeweils drei bis sechs in Draufsicht in axialer Richtung verlaufende, durchquerende Einschnitte und jeweils mehrere Zusatzeinschnitte mit einer Breite von 0,1 mm bis 0,8 mm und einer Tiefe von 0,1 mm bis 0,8 mm ausgebildet, wobei die Zusatzeinschnitte, in Draufsicht betrachtet, zur Umfangsrichtung unter einem Winkel von 40° bis 60° verlaufen. Die Zusatzeinschnitte verlaufen daher relativ zu den im selben mittleren Profilblock befindlichen Einschnitten unter Supplementwinkeln von beispielsweise 50°, sodass diese von 90° um 40° abweichen. Die vorgesehenen Umfangs- und Querrillen sollen für eine verbesserte Lenkstabilität auf Schnee und trockener Fahrbahn unter Aufrechterhaltung einer guten Nässeperformance sorgen. Die Einschnitte tragen zu einer verbesserten Lenkstabilität bei. Die Zusatzeinschnitte tragen zur Verbesserung der Lenkstabilität auf Schnee bei neuem bzw. wenig abgeriebenem Laufstreifen bei.

Aus der WO 2023/274469 A1, die erst nach dem Prioritätsdatum der vorliegenden Anmeldung veröffentlicht worden ist (Art. 54(3) EPÜ), ist ebenfalls ein relevanter Fahrzeugluftreifen mit einem Laufstreifen mit von Umfangsrillen und Querrillen begrenzten, mittleren und schulterseitigen Profilblöcken bekannt.

Ferner ist aus der US 2010/0078107 A1 ein Fahrzeugluftreifen mit einem Lauftreifen mit mittleren Profilblöcken, welche von im Wesentlichen in axialer Richtung verlaufenden Einschnitten mit einer Tiefe von 8,0 mm und einer Breite von 0,6 mm durchquert sind, bekannt. Die mittleren Profilblöcke sind jeweils mit einer in Draufsicht linienförmig verlaufenden Einschnittabfolge versehen, welche aus je einem Zusatzeinschnitt in jedem Blocksegment gebildet ist, wobei die Zusatzeinschnitte eine Tiefe von 7,5 mm und eine Breite von 0,6 mm aufweisen und relativ zu den Einschnitten unter Supplementwinkeln von zirka 90° verlaufen.

Es ist daher bekannt, Profilblöcke von Laufstreifen von Fahrzeugluftreifen mit Einschnitten und zu diesen in Draufsicht unter einem Winkel verlaufenden Zusatzeinschnitten zu versehen, wodurch in verschiedene Richtungen orientierte Griffkanten an der Laufstreifenperipherie zur Verfügung gestellt und derart die Schnee- und Eisgriffeigenschaften, insbesondere beim Bremsen, unter Traktionsbelastung sowie beim Auftreten von Seitenführungskräften, verbessert sind. Dabei sollen der sogenannte "Snap-Out-Effekt" möglichst gering sein und eine für eine gute Abriebbeständigkeit des Laufstreifens ausreichend hohe Steifigkeit der Profilblöcke erhalten bleiben. Als Snap-Out-Effekt wird das Zurückschnappen der Blocksegmente bezeichnet, sobald diese beim Abrollen des Reifens den Kontakt zum Untergrund wieder verlieren und schlagartig ihre ursprüngliche (nicht deformierte) Form einnehmen, wodurch ein ungleichmäßiges Abriebbild auftreten kann und in der Folge die Bremseigenschaften, insbesondere auf trockener Fahrbahn, beeinträchtigt sind.

Der Erfindung liegt daher die Aufgabe zugrunde, bei einem Fahrzeugluftreifen der eingangs genannten Art die Balance zwischen den Schnee- und Eisgriffeigenschaften und den Abriebeigenschaften weiter zu verbessern.

Gelöst wird die gestellte Aufgabe erfindungsgemäß dadurch, dass der Einschnitt zumindest im auf die maximale Tiefe reichenden Einschnittbereich, im Querschnitt betrachtet, einen radial äußeren Einschnittabschnitt aufweist, welcher zur radialen Richtung unter einem Winkel von 5° bis 25° verläuft, gegenüber der Laufstreifenperipherie in radialer Richtung eine Tiefe aufweist und bis zur Laufstreifenperipherie reicht oder in einem zu dieser in radialer Richtung ermittelten Abstand von höchstens 1,5 mm endet, wobei die Zusatzeinschnitte eine maximale Tiefe aufweisen, welche mindestens 1,0 mm und höchstens der Tiefe des radial äußeren Einschnittabschnitts beträgt,
a) wobei zu den mittleren Profilblöcken mittige Profilblöcke, insbesondere von der Reifenäquatorialebene geschnittene mittige Profilblöcke, gehören, welche von zwei zu den Rillen des Laufstreifens gehörenden, bezüglich der Umfangsrichtung gleichsinnig zueinander geneigten, nicht aneinander anschließenden Querrillen mitbegrenzt sind, wobei die mittigen Profilblöcke an den Querrillen Blockkanten aufweisen, wobei die Einschnitte, in Draufsicht betrachtet, bezüglich der Umfangsrichtung gegensinnig zu den Blockkanten geneigt verlaufen, wobei die Zusatzeinschnitte, in Draufsicht betrachtet, bezüglich der Umfangsrichtung gegensinnig zu den Einschnitten geneigt verlaufen,
   und/oder
b) wobei zu den mittleren Profilblöcken halbmittige Profilblöcke gehören, welche in Umfangsrichtung von zwei zu den Rillen des Laufstreifens gehörenden, bezüglich der Umfangsrichtung gleichsinnig zueinander geneigten Querrillen mitbegrenzt sind, wobei die halbmittigen Profilblöcke an den Querrillen Blockkanten aufweisen und wobei die Einschnitte, in Draufsicht betrachtet, parallel oder im Wesentlichen parallel zu den Blockkanten verlaufen und die Zusatzeinschnitte, in Draufsicht betrachtet, bezüglich der Umfangsrichtung gegensinnig zu den Einschnitten geneigt verlaufen, wobei im Wesentlichen parallel zu den Blockkanten verlaufende Einschnitte zur axialen Richtung unter einem Winkel verlaufen, welcher vom Winkel, unter welchem die Blockkanten zur axialen Richtung verlaufen, um höchstens 5° abweicht.

Der zur radialen Richtung deutlich geneigt verlaufende, radial äußere Einschnittabschnitt bildet eine "Schaufelstruktur", welche den Snap-Out-Effekt deutlich reduziert, wodurch die mittleren Profilblöcke gleichmäßiger abreiben. Die Zusatzeinschnitte weisen eine speziell auf die Schaufelstruktur abgestimmte Tiefe auf, sodass diese unter Aufrechterhaltung einer im Hinblick auf einen geringen Snap-Out-Effekt vorteilhaft hohen Steifigkeit der Profilblöcke die Schnee- und Eisgriffeigenschaften verbessern. Die Abriebeigenschaften sind daher auf deutlich vorteilhaftere Weise mit den Schnee- und Eisgriffeigenschaften ausbalanciert.

Gemäß einer bevorzugten Ausführung verläuft der Einschnitt, in Draufsicht betrachtet, zur axialen Richtung unter einem Winkel, welcher vorzugsweise 10° bis 60°, besonders bevorzugt bis zu 50°, beträgt und wobei die Zusatzeinschnitte, in Draufsicht betrachtet, zu dem Einschnitt, welcher im selben mittleren Profilblock ausgebildet ist, bezüglich der Umfangsrichtung gegensinnig geneigt verlaufen. Solche Einschnitte und Zusatzeinschnitte sind vor allem bei in Querrichtung wirkenden Kräften, wie sie beispielsweise beim Fahren von Kurven auftreten, für die Schnee- und Eisgriffeigenschaften vorteilhaft. Ferner weisen die Profilblöcke eine besonders gleichmäßige Steifigkeit auf, wodurch die Profilblöcke gleichmäßiger abreiben.

Bevorzugter Weise beträgt die maximale Tiefe der Zusatzeinschnitte bis zu 2,0 mm. Diese Maßnahme trägt dazu bei, dass die mittleren Profilblöcke eine hohe Steifigkeit erhalten, wodurch der Snap-Out-Effekt weiter reduziert und derart das Abriebverhalten der mittleren Profilblöcke zusätzlich verbessert ist.

Eine weitere bevorzugte Ausführung ist, dadurch gekennzeichnet, dass die Tiefe des radial äußeren Einschnittabschnitts 2,5 mm bis 3,5 mm beträgt. Eine derart ausgeführte "Schaufelstruktur" trägt zu einer weiteren Reduktion des Snap-Out-Effekts bei.

Gemäß einer weiteren bevorzugten Ausführung sind mittlere Profilblöcke vorgesehen, welche zumindest eine Einschnittabfolge aus zumindest drei, insbesondere aus zumindest vier, Zusatzeinschnitten aufweisen. Dies trägt zu einer weiteren Verbesserung der Balance zwischen den Schnee- und Eisgriffeigenschaften und den Abriebeigenschaften bei.

Eine weitere bevorzugte Ausführung ist dadurch gekennzeichnet, dass bei mittigen Profilblöcken die Zusatzeinschnitte parallel oder im Wesentlichen parallel zu den Blockkanten verlaufen, wobei im Wesentlichen parallel zu den Blockkanten verlaufende Zusatzeinschnitte zur axialen Richtung unter einem Winkel verlaufen, welcher vom Winkel, unter welchem die Blockkanten zur axialen Richtung verlaufen, um höchstens 5° abweicht.

Es ist von weiterem Vorteil, wenn die mittigen Profilblöcke jeweils genau eine oder jeweils zwei Einschnittabfolge(n) aus Zusatzeinschnitten aufweisen. Dies ist vor allem in Hinblick auf einen gleichmäßigen Abrieb vorteilhaft.

Ferner ist es von weiterem Vorteil, wenn die halbmittigen Profilblöcke jeweils drei bis acht, vorzugsweise vier bis sieben, besonders bevorzugt fünf oder sechs, Einschnittabfolgen aus Zusatzeinschnitten aufweisen. Dies ist vor allem in Hinblick auf einen gleichmäßigen Abrieb vorteilhaft.

Eine bevorzugten Ausführungsvariante, bei welcher mittige und/oder halbmittige Profilböcke vorgesehen sind, ist dadurch gekennzeichnet, dass der Laufstreifen laufrichtungsgebunden ausgeführt ist, wobei die mittigen Profilblöcke bzw. die halbmittigen Profilblöcke an den Querrillen jeweils eine beim Abrollen des Reifens bei Vorwärtsfahrt zuerst in den Untergrund eintretende einlaufende Blockkante und eine auslaufende Blockkante aufweisen und wobei die mittigen Profilblöcke bzw. die halbmittigen Profilblöcke zwei einander gegenüberliegende spitzwinkelige Blockeckbereiche und zwei einander gegenüberliegende stumpfwinkelige Blockeckbereiche aufweisen,
wobei die Einschnitte in halbmittigen Profilblöcken derart ausgeführt sind, dass der radial äußere Einschnittabschnitt ausgehend von seinem radial inneren Ende zur einlaufenden Blockkante geneigt ist und
wobei die Einschnitte in mittigen Profilblöcken derart ausgeführt sind, dass der radial äußere Einschnittabschnitt ausgehend von seinem radial inneren Ende zum einlaufenden spitzwinkligen Blockeckbereich geneigt ist.

Diese Ausgestaltungen sorgen beim Abrollen des Reifens auf Schnee und/oder Eis dafür, dass die Einschnitte mit ihrer Schaufelstruktur besonders wirkungsvoll in den Untergrund eingreifen. Ferner ist diese Ausgestaltung auf für einen gleichmäßigen Abrieb vorteilhaft.

Eine weitere bevorzugte Ausführung ist dadurch gekennzeichnet, dass der Laufstreifen schulterseitige Profilblöcke aufweist, welche jeweils mit zumindest einem den jeweiligen schulterseitigen Profilblock durchquerenden und diesen in Blocksegmente gliedernden Einschnitt versehen sind, welcher eine Breite von 0,4 mm bis 1,2 mm und zumindest in einem in Draufsicht über einen Teil des Einschnitts reichenden Einschnittbereich eine maximale Tiefe von 70% bis 100% der Profiltiefe aufweist, wobei die Einschnitte zumindest im auf die maximale Tiefe reichenden Einschnittbereich, im Querschnitt betrachtet, einen radial äußeren Einschnittabschnitt aufweisen, welcher zur radialen Richtung unter einem Winkel von 5° bis 25° verläuft, bis zur Laufstreifenperipherie reicht oder in einem zu dieser in einem radialer Richtung ermittelten Abstand von höchstens 1,5 mm endet, wobei schulterseitige Profilblöcke vorgesehen sind, welche jeweils zumindest eine in Draufsicht linienförmig verlaufende Einschnittabfolge aus zumindest zwei miteinander fluchtend verlaufenden mikrorillenartigen Zusatzeinschnitten mit einer Breite von 0,4 mm bis 1,2 mm, vorzugsweise von bis zu 0,6 mm, und einer in radialer Richtung ermittelten konstanten Tiefe von 0,4 mm bis 1,2 mm, insbesondere von bis zu 1,0 mm, aufweisen, wobei die jeweils zur selben Einschnittabfolge gehörenden mikrorillenartigen Zusatzeinschnitte in unmittelbar benachbarten Blocksegmenten ausgebildet sind und wobei die mikrorillenartigen Zusatzeinschnitte relativ zum im selben schulterseitigen Profilblock befindlichen Einschnitt unter Supplementwinkeln verlaufen, welche von 90° um bis zu 40° abweichen.

Derart ausgeführte schulterseitige Profilblöcke sind eine besonders vorteilhafte Ergänzung zu den mittleren Profilblöcken, da sie eine zu diesen analoge Wirkung hinsichtlich Abrieb sowie Schnee- und Eisgriffeigenschaften zeigen.

Bei der letztgenannten bevorzugten Ausführung ist es günstig, wenn die Zusatzeinschnitte, in Draufsicht betrachtet, bezüglich der Umfangsrichtung gleichsinnig zu den Einschnitten geneigt verlaufen.

Für den Effekt des die Schaufelstruktur bildenden radial äußeren Einschnittabschnitts ist es von Vorteil, wenn der Winkel, unter welchem der radial äußere Einschnittabschnitt verläuft, 10° bis 20° beträgt.

Eine weitere bevorzugte Ausführung ist dadurch gekennzeichnet, dass der Abstand, in welchem der radial äußere Einschnittabschnitt zur Laufstreifenperipherie endet, mindestens 0,3 mm beträgt.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf einen in die Ebene abgewickelten Profilabschnitt eines Laufstreifens eines Fahrzeugluftreifens mit einer Ausführungsvariante der Erfindung,
Fig. 2 eine vergrößerte Draufsicht auf einen halbmittigen Profilblock des Laufstreifens des Fahrzeugluftreifens aus Fig. 1,
Fig. 3 eine weiter vergrößerte Draufsicht auf das Detail Z₃ der Fig. 2,
Fig. 4 einen Schnitt entlang der Linie IV-IV der Fig. 3,
Fig. 5 einen Schnitt entlang der Linie V-V der Fig. 3,
Fig. 6 einen Schnitt entlang der Linie VI-VI der Fig. 3,
Fig. 7 eine Draufsicht auf einen mittigen Profilblock des Laufstreifens des Fahrzeugluftreifens aus Fig. 1 und
Fig. 8 eine Draufsicht auf einen schulterseitigen Profilblock des Laufstreifens des Fahrzeugluftreifens aus Fig. 1.

Gemäß der Erfindung ausgeführte Fahrzeugluftreifen sind Reifen für Kraftfahrzeuge, insbesondere für mehrspurige Kraftfahrzeuge, bevorzugt für Personenkraftwagen (PKWs), Vans (Transporter) oder SUVs, sowie vorzugsweise Reifen in Radialbauart für Felgen mit einem Felgendurchmesser von 18, 19, 20, 21, 22 oder 23 Zoll.

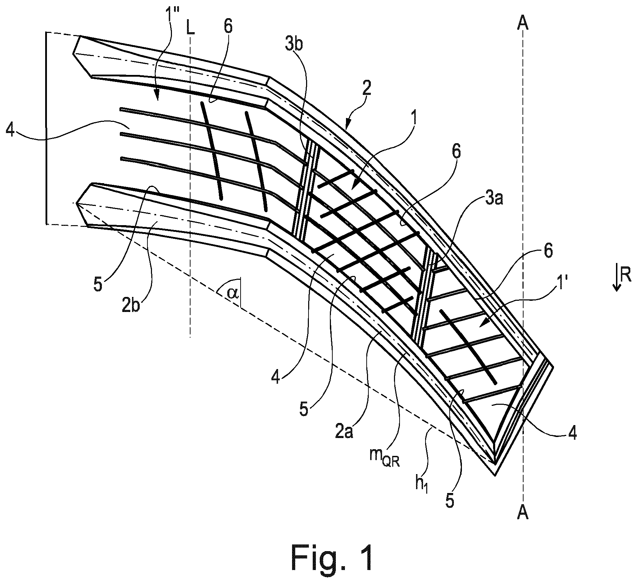

Fig. 1 zeigt eine Draufsicht auf einen bogenförmig verlaufenden Profilpositivabschnitt eines Laufstreifens eins Fahrzeugluftreifens. Der Profilpositivabschnitt umfasst einen halbmittigen Profilbock 1, einen mittigen Profilblock 1' und einen schulterseitigen Profilblock 1", wobei die Profilblöcke 1, 1', 1" in Umfangsrichtung gemeinsam von zwei Querrillen 2 begrenzt sind. Der Laufstreifen weist in der gezeigten Laufstreifenhälfte eine Vielzahl solcher Profilpositivabschnitte auf. Die Reifenäquatorialebene ist durch eine Linie A-A und der eine seitliche Rand der Bodenaufstandsfläche des Laufstreifens ist durch eine Linie L gekennzeichnet, wobei die Bodenaufstandsfläche dem statisch ermittelten Footprint (ermittelt mit einem auf einer Normfelge montierten Reifen, Last bei 70 % der maximalen Tragfähigkeit, Innendruck 85 % des Normdrucks, gemäß ETRTO-Standards) entspricht. Der Laufstreifen ist laufrichtungsgebunden ausgeführt, wobei der Fahrzeugluftreifen derart an einem Fahrzeug, etwa einem PKW, zu montieren ist, dass er die durch den Pfeil R symbolisierte Abrollrichtung bei Vorwärtsfahrt aufweist. Bevorzugter Weise ist in der zweiten Laufstreifenhälfte ebenfalls eine Vielzahl der Profilpositivabschnitte ausgebildet, wobei die Profilpositivabschnitte insgesamt V-förmig über die Laufstreifenbreite verlaufen und die in der einen Laufstreifenhälfte befindlichen Profilpositivabschnitte zu den in der anderen Laufstreifenhälfte befindlichen Profilpositivabschnitten in Umfangsrichtung versetzt sind.

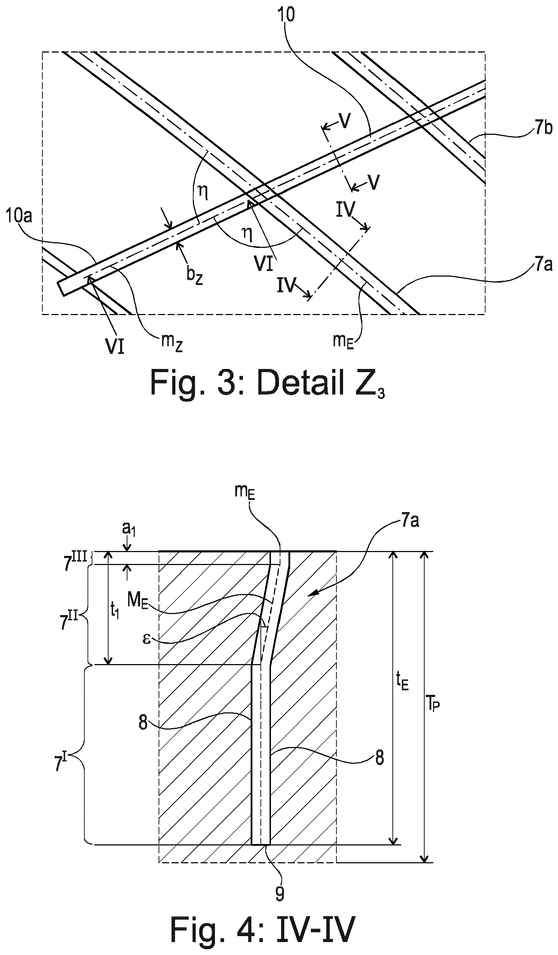

Die Querrillen 2 weisen jeweils eine in Draufsicht dem Rillenverlauf folgende Rillenmittellinie m_{QR} auf, sind in radialer Richtung auf die jeweils vorgesehene Profiltiefe T_{P} (in Fig. 4 angedeutet) von üblicherweise 6,5 mm bis 12,0 mm ausgeführt, weisen ferner an ihrer schmälsten Stelle eine in Draufsicht senkrecht zur Rillenmittellinie m_{QR} ermittelte Breite von zumindest 3,0 mm, insbesondere von zumindest 4,0 mm, auf, verlaufen - in Draufsicht betrachtet und bezogen auf eine die Enden der jeweiligen Rillenmittellinie m_{QR} verbindende gerade Hilfslinie h₁ - zur Umfangsrichtung unter einem Winkel α von 50° bis 70° und setzen sich beim gezeigten Ausführungsbeispiel jeweils aus einem in Draufsicht gebogen verlaufenden, laufstreifeninnenseitigen Rillenabschnitt 2a und einem zur Umfangsrichtung gegenüber dem laufstreifeninnenseitigen Rillenabschnitt 2a stärker geneigten, kaum merkbar gebogen verlaufenden, schulterseitigen Rillenabschnitt 2b zusammen.

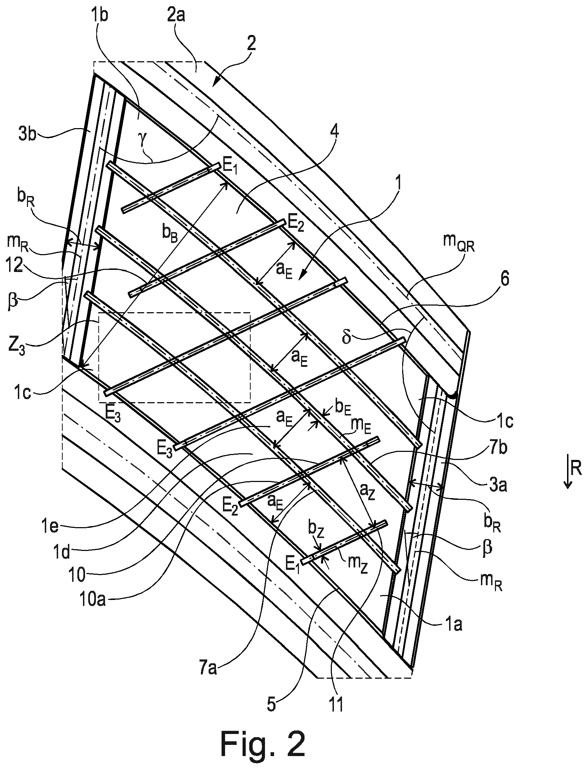

Zwischen in Umfangsrichtung benachbarten Querrillen 2 verlaufen eine weiter laufstreifeninnenseitig ausgebildete Rille 3a, welche den mittigen Profilblock 1' vom halbmittigen Profilblock 1 trennt, und eine weiter laufstreifenaußenseitig ausgebildete Rille 3b, welche den halbmittigen Profilblock 1 vom schulterseitigen Profilblock 1" trennt. Gemäß Fig. 2 weisen die Rillen 3a, 3b jeweils eine Rillenmittellinie m_{R}, eine in Draufsicht senkrecht zur Rillenmittellinie m_{R} ermittelte konstante Breite b_{R} von 2,0 mm bis 4,0 mm und in radialer Richtung eine konstante Tiefe von 30% bis 70% der Profiltiefe T_{P} (Fig. 4) auf, wobei die Rillen 3a, 3b, in Draufsicht betrachtet, zwischen den laufstreifeninnenseitigen Rillenabschnitten 2a, gerade, zur Umfangsrichtung jeweils unter einem Winkel β von 5° bis 35°, insbesondere von bis zu 15°, und bezüglich der Umfangsrichtung gegensinnig zu den laufstreifeninnenseitigen Rillenabschnitten 2a geneigt verlaufen.

Wie Fig. 1 ferner zeigt, weisen die Profilblöcke 1, 1', 1" jeweils eine in der Laufstreifenperipherie liegende Blockaußenfläche 4, eine an der einen Querrille 2 ausgebildete, die Blockaußenfläche 4 mitbegrenzende, beim Abrollen des Reifens bei Vorwärtsfahrt (Pfeil R) zuerst in den Untergrund eintretende, einlaufende Blockkante 5, eine an der anderen Querrille 2 liegende, die Blockaußenfläche 4 mitbegrenzende, auslaufende Blockkante 6 und eine in Draufsicht senkrecht zu und zwischen den Blockkanten 5, 6 ermittelte maximale Blockbreite b_{B} (Fig. 2, Fig. 7, Fig. 8, Breite an der breitesten Stelle) auf. Die Blockkanten 5, 6 verlaufen - analog zu den Querrillen 2 - in Draufsicht betrachtet gebogen, wobei die Ermittlung der maximalen Blockbreite b_{B} (Fig. 2, Fig. 7, Fig. 8) senkrecht zwischen an die Blockkanten 5, 6 angelegten, parallel zueinander verlaufenden Tangenten erfolgt (Tangenten nicht gezeigt).

Gemäß Fig. 2 weist der halbmittige Profilblock 1 in Draufsicht im Wesentlichen die Form eines in axialer Richtung langgestreckten Parallelogramms auf, verfügt über zwei einander gegenüberliegende spitzwinklige Blockeckbereich 1a, 1b - nämlich einen beim Abrollen des Reifens bei Vorwärtsfahrt (Pfeil R) zuerst in den Untergrund eintretenden, einlaufenden, spitzwinkligen Blockeckbereiche 1a und einen auslaufenden, spitzwinkeligen Blockeckbereich 1b - und zwei einander gegenüberliegende stumpfwinkelige Blockeckbereiche 1c. An den spitzwinkeligen Blockeckbereichen 1a, 1b schließt die jeweilige Querrille 2 mit der Rille 3a bzw. 3b einen über den halbmittigen Profilblock 1 ermittelten, auf die Rillenmittellinien m_{QR}, m_{R} bezogenen, spitzen Winkel γ ein (ausschließlich bei Rille 3b eingezeichnet). An den stumpfwinkeligen Blockeckbereichen 1c schließt die jeweilige Querrille 2 mit der Rille 3a bzw. 3b einen über den halbmittigen Profilblock 1 ermittelten, auf die Rillenmittellinien m_{QR}, m_{R} bezogenen, stumpfen Winkel δ ein (ausschließlich bei Rille 3a eingezeichnet).

Der halbmittige Profilblock 1 ist von drei in Draufsicht in Längserstreckung des Profilblocks 1 sowie parallel zueinander verlaufenden Einschnitten 7a, 7b - nämlich zwei randseitigen Einschnitten 7a und einem zwischen diesen liegenden, mittleren Einschnitt 7b - durchquert, wobei jeder Einschnitt 7a, 7b in die Rillen 3a, 3b einmündet, eine in Draufsicht dem Einschnittverlauf folgende Einschnittmittellinie m_{E}, eine senkrecht zur Einschnittmittellinie m_{E} ermittelte konstante Breite b_{E} von 0,4 mm bis 1,2 mm, insbesondere von bis zu 0,8 mm, und in radialer Richtung eine maximale Tiefe t_{E} (Tiefe an der tiefsten Stelle, Fig. 4: gezeigt für Einschnitt 7a) von 70% bis 100% der Profiltiefe T_{P} (Fig. 4), insbesondere von höchstens der um 0,5 mm verringerten Profiltiefe T_{P}, aufweist. Die Einschnitte 7a, 7b sind derart gleichmäßig oder im Wesentlichen gleichmäßig über die maximale Blockbreite b_{B} verteilt angeordnet, dass der mittlere Einschnitt 7b zu jedem randseitigen Einschnitt 7a - bezogen auf die Einschnittmittellinien m_{E} - einen in Draufsicht senkrecht zu den Einschnittmittellinien m_{E} ermittelten Abstand a_{E} aufweist und die randseitigen Einschnitte 7a - bezogen auf die Einschnittmittellinie m_{E} - zur jeweils nächstliegenden Blockkante 5, 6 jeweils einen in Draufsicht senkrecht zur Einschnittmittellinie m_{E} als kleinstmöglichen Abstand ermittelten Abstand a_{E} aufweisen, wobei die Abstände a_{E} jeweils 15% bis 35%, insbesondere von 20% bis 30%, der maximalen Blockbreite b_{B} betragen. Die Ermittlung der Abstände a_{E} erfolgt senkrecht zwischen an die Einschnittmittellinien m_{E} bzw. an die Blockkanten 5, 6 angelegten, parallel zueinander verlaufenden Tangenten. Die Einschnitte 7a, 7b verleihen dem halbmittigen Profilblock 1 zwei randseitige Blocksegmente 1d und zwei mittlere Blocksegmente 1e.

Gemäß Fig. 4 ist der Einschnitt 7a, 7b (gezeigt für einen randseitigen Einschnitt 7a, siehe Fig. 3 iVm Fig. 2) durch zwei Einschnittwände 8 und einen Einschnittgrund 9 begrenzt und weist eine von der Einschnittmittellinie m_{E} (in Fig. 4 andeutet, vergl. Fig. 3) ausgehende, zu den Einschnittwänden 8 übereinstimmend beabstandete Einschnittmittelfläche M_{E} auf. Der Einschnitt 7a, 7b setzt sich, im in Draufsicht senkrecht zur Einschnittmittellinie m_{E} verlaufenden Querschnitt betrachtet (vergl. Lage der Linie IV-IV in Fig. 3), in radialer Richtung aus einem in radialer Richtung verlaufenden, radial inneren Einschnittabschnitt 7^{I}, einem radial äußeren Einschnittabschnitt 7^{II} und einem zur Laufstreifenperipherie verlaufenden Übergangsabschnitt 7^{III} zusammen.

Der radial äußere Einschnittabschnitt 7^{II} verläuft, im erwähnten Querschnitt betrachtet, gerade sowie zur radialen Richtung unter einem Winkel ε von 5° bis 25°, insbesondere von 10° bis 20°, reicht in radialer Richtung in eine gegenüber der Laufstreifenperipherie ermittelte, auf die Einschnittmittelfläche M_{E} bezogene Tiefe t₁ von 2,5 mm bis 3,5 mm und weist zur Laufstreifenperipherie eine auf die Einschnittmittelfläche M_{E} bezogenen, in radialer Richtung ermittelten Abstand a₁ von 0,3 mm bis 1,5 mm auf. Wie Fig. 4 iVm Fig. 3 und Fig. 2 zeigt, ist die Neigung des radial äußeren Einschnittabschnitts 7^{II} derart, dass dieser ausgehend von seinem radial inneren Ende zur einlaufenden Blockkante 5 (Fig. 2) geneigt ist. Der radial äußere Einschnittabschnitt 7^{II} entfernt sich daher mit zunehmender Tiefe von der einlaufenden Blockkante 5.

Gemäß Fig. 2 ist der halbmittige Profilblock 1 mit sechs in Draufsicht linienförmigen, parallel zueinander verlaufenden Einschnittabfolgen E₁, E₂, E₃ aus in den Blocksegmenten 1d, 1e ausgebildeten Zusatzeinschnitten 10, 10a, 11, 12 versehen, wobei sämtliche Zusatzeinschnitte 10, 10a, 11, 12, in Draufsicht betrachtet, gerade sowie zu den Einschnitten 7a, 7b bezüglich der Umfangsrichtung gegensinnig geneigt verlaufen und wobei die Zusatzeinschnitte 10, 10a, 11, 12 innerhalb jeder Einschnittabfolge E₁, E₂, E₃ in ihrer Längserstreckungsrichtung aufeinanderfolgen und miteinander fluchtend verlaufen.

Die Einschnittabfolgen E₁, E₂, E₃ sind im Bereich zwischen den spitzwinkeligen Blockeckbereichen 1a, 1b aufeinanderfolgend ausgebildet, wobei zu den Einschnittabfolgen E₁, E₂, E₃ zwei randseitige Einschnittabfolgen E₁, zwei zwischen den randseitigen Einschnittabfolgen E₁ liegende Einschnittabfolgen E₂ und zwei zwischen den Einschnittabfolgen E₂ liegende, mittlere Einschnittabfolgen E₃ gehören.

Die randseitigen Blocksegmente 1d sind jeweils mit vier das Blocksegment 1d durchquerenden Zusatzeinschnitten 10a versehen. Die mittleren Blocksegmente 1e sind jeweils mit einem in den jeweiligen angrenzenden, randseitigen Einschnitt 7a einmündenden, randseitig ausgebildeten, einseitig geschlossenen, d.h. einseitig im Blocksegment 1e endenden, Zusatzeinschnitt 11, einem in den jeweiligen angrenzenden, mittleren Einschnitt 7b einmündenden, randseitig ausgebildeten, einseitig geschlossenen Zusatzeinschnitt 12 und drei im Bereich zwischen dem einseitig geschlossenen Zusatzeinschnitt 11 und dem einseitig geschlossenen Zusatzeinschnitt 12 ausgebildeten, durchquerenden Zusatzeinschnitten 10 versehen. Der Zusatzeinschnitt 11 befindet sich dabei an jenem Randbereich des jeweiligen mittleren Blocksegmentes 1e, welcher sich näher zum spitzwinkeligen Blockeckbereich 1a bzw. 1b des jeweils benachbarten randseitigen Blocksegmentes 1d befindet.

Die randseitigen Einschnittabfolgen E₁ sind jeweils aus dem zum spitzwinkeligen Blockeckbereich 1a bzw. 1b nächstliegenden Zusatzeinschnitt 10a aus dem jeweiligen randseitigen Blocksegment 1d und dem Zusatzeinschnitt 11 aus dem zum jeweiligen randseitigen Blocksegment 1d benachbarten mittleren Blocksegment 1e gebildet. Die Einschnittabfolgen E₂ sind jeweils aus einem Zusatzeinschnitt 10a aus dem jeweiligen randseitigen Blocksegment 1d, einem Zusatzeinschnitt 10 aus dem zu diesem randseitigen Blocksegment 1d benachbarten mittleren Blocksegment 1e und dem entsprechenden Zusatzeinschnitt 12 aus dem jeweils anderen, also weiteren, mittleren Blocksegment 1e gebildet. Die mittleren Einschnittabfolgen E₃ sind jeweils aus vier Zusatzeinschnitten 10, 10a und daher aus je einem Zusatzeinschnitt 10 aus jedem mittleren Blocksegment 1e und je einem Zusatzeinschnitt 10a aus jedem randseitigen Blocksegment 1d gebildet.

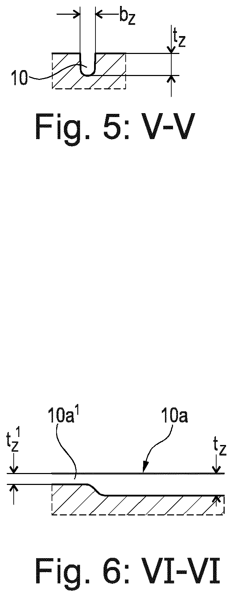

Die Zusatzeinschnitte 10a, 10, 11, 12 weisen jeweils eine Einschnittmittellinie mz, eine an der Blockaußenfläche 4 in Draufsicht senkrecht zur Einschnittmittellinie mz ermittelte konstante Breite bz (vergl. Fig. 3: Zusatzeinschnitt 10a, 10, Fig. 5: Zusatzeinschnitt 10) von 0,4 mm bis 1,2 mm, vorzugsweise von bis zu 0,8 mm, und eine in radialer Richtung ermittelte maximale Tiefe tz (Tiefe an der tiefsten Stelle, Fig. 5: Zusatzeinschnitt 10, Fig. 6: Zusatzeinschnitt 10a) auf, wobei die maximale Tiefe tz mindestens 1,0 mm und höchstens der Tiefe t₁ (Fig. 4), vorzugsweise bis zu 2,0 mm, beträgt. Die maximale Tiefe tz der Zusatzeinschnitte 10, 11, 12 ist jeweils konstant ausgeführt. Wie Fig. 3 in Kombination mit Fig. 6 zeigt, weisen die Zusatzeinschnitte 10a jeweils einen in die jeweilige Querrille 2 (Fig. 2) einmündenden, radseitigen Zusatzeinschnittabschnitt 10a¹ auf, welcher in radialer Richtung eine konstante Tiefe t_{Z}¹ aufweist, die mindestens 0,5 mm beträgt um mindestens 0,5 mm kleiner ist als die maximale Tiefe tz. Gemäß Fig. 2 weisen Zusatzeinschnitte 10a, 10, 11, 12, welche im selben Blocksegment 1d, 1e ausgebildet sind und auseinander unmittelbar benachbarten Einschnittabfolgen E₁, E₂, E₃ stammen, voneinander auf die Einschnittmittellinien m_{Z} bezogene, in Draufsicht senkrecht zu diesen ermittelte gegenseitige Abstände az von 4,0 mm bis 15,0 mm auf, wobei die Abstände az vorzugsweise um höchstens 3,0 mm voneinander abweichen.

Wie Fig. 2 in Kombination mit Fig. 3 zeigt, verlaufen die Zusatzeinschnitte 10a, 10, 11, 12 relativ zu den Einschnitten 7a, 7b - bezogen auf die Einschnittmittellinien m_{E}, mz - jeweils unter zwei Supplementwinkel η (in Fig. 3 für Zusatzeinschnitt 10a gezeigt), welche sich bekannter Weise auf 180° ergänzen und von 90° jeweils um bis zu 40°, bevorzugt um bis zu 35°, besonders bevorzugt um bis zu 30°, abweichen. Da die Einschnittmittellinie m_{E} bogenförmig verläuft, sind die Supplementwinkel η (Fig. 3) jeweils relativ zu einer an die Einschnittmittellinie m_{E} angelegten, durch den gegenseitigen Schnittpunkt der Einschnittmittellinien mz, m_{E} verlaufende Tangente ermittelt (Tangente nicht eingezeichnet). Die Zusatzeinschnitte 10a, 10, 11, 12 verlaufen relativ zur Umfangsrichtung stärker geneigt als die Einschnitte 7a, 7b.

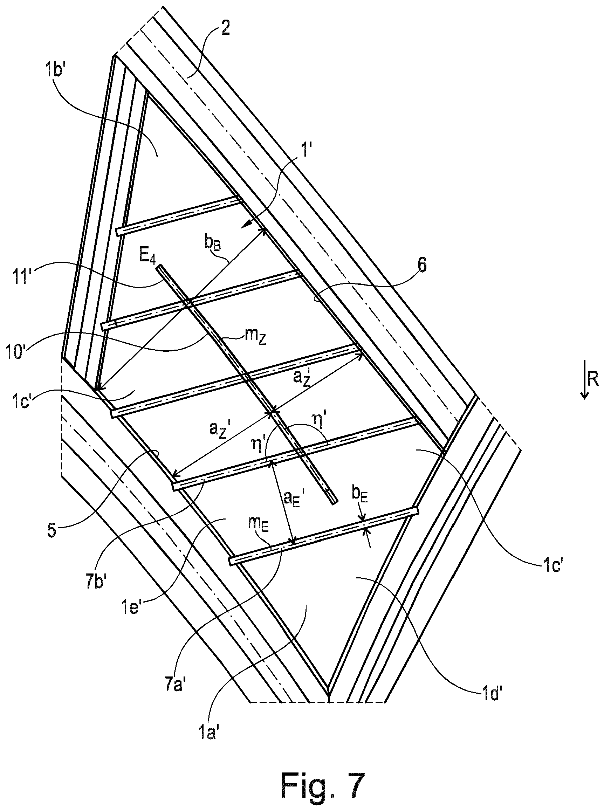

Wie nachfolgend unter Bezugnahme auf Fig. 7 ausgeführt ist, weist der mittige Profilblock 1' Einschnitte 7a', 7b' und Zusatzeinschnitte 10', 11' auf, wobei die Einschnitte 7a', 7b' mit den Einschnitten 7a, 7b und die Zusatzeinschnitte 10', 11' mit den Zusatzeinschnitten 10, 11 im Hinblick auf ihre Breite b_{E}, bz, ihre maximale Tiefe t_{E}, tz sowie im Hinblick auf ihren Querschnitt übereinstimmen. Die Einschnitte 7a', 7b' weisen daher die Einschnittabschnitte 7^{I}, 7^{II} und den Übergangsabschnitt 7^{III} auf.

Gemäß Fig. 7 weist der mittige Profilblock 1' in Draufsicht im Wesentlichen die Form eines in axialer Richtung langgestreckten Parallelogramms auf und verfügt über zwei einander gegenüberliegende spitzwinklige Blockeckbereich 1a', 1b' - nämlich einen beim Abrollen des Reifens bei Vorwärtsfahrt (Pfeil R) zuerst in den Untergrund eintretenden, einlaufenden spitzwinkligen Blockeckbereich 1a' und einem auslaufenden spitzwinkeligen Blockeckbereich 1b' - und zwei einander gegenüberliegende stumpfwinkelige Blockeckbereich 1c'. Der mittige Profilblock 1' ist von fünf in Draufsicht bezüglich der Umfangsrichtung gegensinnig zu den Blockkanten 5, 6 geneigt sowie parallel zueinander verlaufenden Einschnitten 7a', 7b' - nämlich zwei randseitigen Einschnitten 7a' und drei mittleren Einschnitt 7b' - durchquert. Die Einschnitte 7a', 7b' sind derart gleichmäßig oder im Wesentlichen gleichmäßig zwischen dem einlaufenden, spitzwinkligen Blockeckbereich 1a' und dem auslaufenden, spitzwinkeligen Blockeckbereich 1b' verteilt angeordnet, dass einander benachbarte Einschnitte 7a', 7b' - bezogen auf die Einschnittmittellinien m_{E} - in Draufsicht senkrecht zu den Einschnittmittellinien m_{E} ermittelten Abstand a_{E}' von 4,5 mm bis 15,0 mm, insbesondere von bis zu 10,0 mm, voneinander aufweisen. Die Neigung des radial äußeren Einschnittabschnitts 7^{II} (vergl. Fig. 4) der Einschnitte 7a', 7b' ist derart, dass dieser ausgehend von seinem radial inneren Ende zum einlaufenden spitzwinkligen Blockeckbereich 1a' geneigt ist. Der radial äußere Einschnittabschnitt 7^{II} entfernt sich daher mit zunehmender Tiefe von einlaufenden spitzwinkligen Blockeckbereich 1a'. Die Einschnitte 7a', 7b' verleihen dem mittigen Profilblock 1' zwei randseitige Blocksegmente 1d' und vier mittlere Blocksegmente 1e'.

Der mittige Profilblock 1' ist ferner mit einer in Draufsicht linienförmigen Einschnittabfolge E₄ aus in den mittleren Blocksegmenten 1e' ausgebildeten Zusatzeinschnitten 10', 11' versehen, wobei sämtliche Zusatzeinschnitte 10', 11', in Draufsicht betrachtet, kaum merkbar gebogen (bogenförmig) sowie zu den Einschnitten 7a', 7b' bezüglich der Umfangsrichtung gegensinnig geneigt verlaufen und wobei die Zusatzeinschnitte 10', 11' in ihrer Längserstreckungsrichtung aufeinanderfolgen und miteinander fluchtend verlaufen.

Die beiden weiter blockinnenseitig liegenden, einander unmittelbar benachbarten, mittleren Blocksegment 1e' sind jeweils mit einem durchquerenden Zusatzeinschnitt 1' und die beiden weiter blockaußenseitig liegenden, mittleren Blocksegmente 1e' sind jeweils mit einem einseitig geschlossen endenden Zusatzeinschnitt 11' versehen, wobei der Zusatzeinschnitt 11' an jenen mittleren Einschnitt 7b' anschließt, zu welchem auch der entsprechende, durchquerende Zusatzeinschnitt 10' verläuft. Die Zusatzeinschnitte 10', 11' weisen, in Draufsicht betrachtet, zu jeder Blockkante 5, 6 einen senkrecht zur Einschnittmittellinie mz ermittelten Abstand a_{Z}' von 45% bis 55% der Blockbreite b_{B} auf, wobei sich die Abstände az' auf eine an die jeweilige Einschnittmittellinie mz angelegte Tangente beziehen. Die Zusatzeinschnitte 10', 11' verlaufen relativ zu den Einschnitten 7a', 7b' - bezogen auf die Einschnittmittellinien m_{E}, mz - jeweils unter zwei Supplementwinkel n', welche sich bekannter Weise auf 180° ergänzen und von 90° jeweils um bis zu 40°, bevorzugt um bis zu 35°, besonders bevorzugt um bis zu 30°, abweichen. Da die Einschnittmittellinie mz bogenförmig verläuft, beziehen sich die Supplementwinkel η' auf eine an die Einschnittmittellinie m_{Z} angelegte, durch den gegenseitigen Schnittpunkt Einschnittmittellinie mz, m_{E} verlaufende Tangente (Tangente nicht eingezeichnet).

Wie nachfolgend genauer ausgeführt ist, weist der schulterseitige Profilblock 1" Einschnitte 7a", 7b" und mikrorillenartige Zusatzeinschnitte 10", 11" auf, wobei die Einschnitte 7a", 7b" mit den Einschnitten 7a, 7b im Hinblick auf ihre Breite b_{E} ihre Tiefe t_{E} sowie im Hinblick auf ihren Querschnitt übereinstimmen. Die Einschnitte 7a", 7b" weisen daher die Einschnittabschnitte 7^{I}, 7^{II} und den Übergangsabschnitt 7^{III} *a*uf.

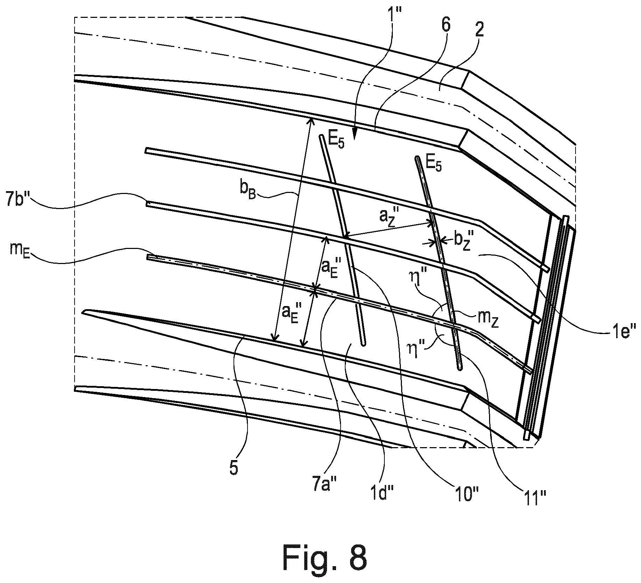

Gemäß Fig. 8 ist der schulterseitige Profilblock 1" von drei in Draufsicht bezüglich der Umfangsrichtung gleichsinnig zu den Querrillen 2 geneigt sowie parallel zueinander verlaufenden Einschnitten 7a", 7b" - nämlich zwei randseitigen Einschnitten 7a" und einem mittleren Einschnitt 7b" - innerhalb der Bodenaufstandsfläche durchquert. Die Einschnitte 7a", 7b" sind derart gleichmäßig oder im Wesentlichen gleichmäßig über die Blockbreite b_{B} verteilt angeordnet, dass der mittlere Einschnitt 7b" zu jedem randseitigen Einschnitt 7a" - bezogen auf die Einschnittmittellinien m_{E} - einen in Draufsicht senkrecht zu den Einschnittmittellinien m_{E} ermittelten Abstand a_{E}" aufweist und die randseitigen Einschnitte 7a" - bezogen auf die Einschnittmittellinie m_{E} - zur jeweils nächstliegenden Blockkante 5, 6 jeweils einen in Draufsicht senkrecht zur Einschnittmittellinie m_{E} als kleinstmöglichen Abstand ermittelten Abstand a_{E}" aufweisen, wobei die Abstände a_{E}" jeweils 15% bis 35%, insbesondere 20% bis 30%, der maximalen Blockbreite b_{B} betragen. Die Einschnitte 7a", 7b" verleihen dem schulterseitigen Profilblock 1" zwei randseitige Blocksegmente 1d" und zwei mittlere Blocksegmente 1e".

Der schulterseitige Profilblock 1" ist ferner mit zwei in Draufsicht linienförmigen, parallel zueinander verlaufenden Einschnittabfolgen E₅ aus in den Blocksegmenten 1d", 1e" ausgebildeten mikrorillenartigen Zusatzeinschnitten 10", 11" versehen, wobei sämtliche Zusatzeinschnitte 10", 11", in Draufsicht betrachtet, kaum merkbar gebogen sowie zu den Einschnitten 7a", 7b" bezüglich der Umfangsrichtung gleichsinnig geneigt verlaufen und wobei die Zusatzeinschnitte 10", 11" innerhalb der Einschnittabfolge E₅ in ihrer Längserstreckung aufeinanderfolgen und fluchtend miteinander verlaufen.

Die mittleren Blocksegment 1e" sind jeweils mit zwei durchquerenden Zusatzeinschnitten 10" und die randseitigen Blocksegmente 1d" sind jeweils mit einem einseitig geschlossen endenden Zusatzeinschnitt 11" versehen, wobei die Zusatzeinschnitte 11" an den jeweiligen randseitigen Einschnitt 7a" anschließen. Die Zusatzeinschnitte 10", 11", welche im selben Blocksegment 1d", 1e" ausgebildet sind, weisen voneinander auf die Einschnittmittellinien mz bezogene, in Draufsicht senkrecht zu diesen ermittelte gegenseitige Abstände az" von 7,0 mm bis 15,0 mm auf. Die Zusatzeinschnitte 10", 11" verlaufen relativ zu den Einschnitten 7a", 7b" - bezogen auf die Einschnittmittellinien m_{E}, mz - jeweils unter zwei Supplementwinkel η", welche von 90° jeweils um bis zu 40°, bevorzugt um bis zu 35°, besonders bevorzugt um bis zu 30°, abweichen. Da die Einschnittmittellinie mz bogenförmig verläuft, sind die Supplementwinkel η" jeweils relativ zu einer an die Einschnittmittellinie mz angelegten, durch den gegenseitigen Schnittpunkt der Einschnittmittellinien mz, m_{E} verlaufenden Tangente ermittelt (Tangente nicht eingezeichnet).

Die mikrorillenartigen Zusatzeinschnitte 10", 11" weisen jeweils eine konstante Breite bz" von 0,4 mm bis 1,2 mm, vorzugsweise von bis zu 0,6 mm, und eine in radialer Richtung ermittelte konstante Tiefe von 0,4 mm bis 1,2 mm, insbesondere von bis zu 1,0 mm.

Die Erfindung ist auf das beschriebene Ausführungsbeispiel nicht beschränkt.

Der Laufstreifen weist zumindest mittlere Profilblöcke (halbmittige Profilblöcke und/oder mittige Profilblöcke) auf, welche mit Einschnitten und Zusatzeinschnitten versehen sind.

Die Zusatzeinschnitte können die Blocksegmente jeweils durchqueren oder ein- oder beidseitig innerhalb der Blocksegmente enden, wobei bevorzugt Zusatzeinschnitte vorgesehen sind, welche an der Blockaußenfläche jeweils in einem in Verlängerung (gerade verlaufender Zusatzeinschnitt) bzw. in tangentialer Verlängerung (gebogen verlaufender Zusatzeinschnitt) ihrer Einschnittmittellinie gemessenen Abstand von 0,1 mm bis 1,0 mm vor dem jeweiligen Einschnitt bzw. der jeweiligen Blockkante enden. Die Zusatzeinschnitte verlaufen, in Draufsicht betrachtet, gerade oder durchgehend gebogen. Die Zusatzeinschnitte sind vorzugsweise zumindest über den Großteil ihrer in Draufsicht vorliegenden Längserstreckung auf die maximale Tiefe tz ausgeführt und können gegenüber dem sonstigen Zusatzeinschnitt seichter ausgeführte Randabschnitte aufweisen.

Die in den mittleren Profilblöcken ausgebildeten Einschnitte verlaufen, in Draufsicht betrachtet, zur axialen Richtung unter einem Winkel von vorzugsweise 10° bis 60°, besonders bevorzugt von bis zu 50°. Die Einschnitte - unabhängig davon, ob sie in Draufsicht insgesamt gebogen oder gerade ausgeführt sind - können in Draufsicht abschnittsweise wellenförmig verlaufen sowie seichter ausgeführte Randabschnitte aufweisen. Die Winkel und Supplementwinkel, welche bei solchen zumindest abschnittsweise wellenförmig verlaufenden Einschnitten ermittelt sind, beziehen sich auf eine der Achse der Welle entsprechenden Einschnittmittellinie. Die Achse der Welle ist bekannter Weise jene Linie, bezüglich welcher die Amplitude der Welle ermittelt ist. Sind die Einschnitte gebogen beziehen sich die Winkel und Supplementwinkel auf lokal an die Einschnittmittellinien angelegte Tangenten.

Bevorzugter Weise verlaufen die in mittigen Profilblöcken ausgebildeten Zusatzeinschnitte, in Draufsicht betrachtet, zur axialen Richtung unter Winkel, welcher vom Winkel, unter dem die an den Querrillen ausgebildeten Blockkanten zur axialen Richtung verlaufen, um höchstens 5°, insbesondere um höchstens 3°, abweicht.

Ferner ist es bevorzugt, wenn die in halbmittigen Profilblöcken ausgebildeten Einschnitte, in Draufsicht betrachtet, zur axialen Richtung unter Winkel verlaufen, welcher vom Winkel, unter dem die an den Querrillen ausgebildeten Blockkanten zur axialen Richtung verlaufen, um höchstens 5°, insbesondere um höchstens 3°, abweicht.

Die Einschnitte weisen den radial inneren Einschnittabschnitt, den radial äußeren Einschnittabschnitt und bevorzugt auch den Übergangsabschnitt jeweils zumindest in einem in Draufsicht über einen Teil des Einschnitts reichenden Einschnittbereich auf, welcher in Draufsicht vorzugsweise zumindest über den Großteil des jeweiligen Einschnitts verläuft. Der Übergangsabschnitt ist also optional, sodass der radial äußere Einschnittabschnitt bis zur Laufstreifenperipherie reichen kann.

Der Laufsteifen muss nicht laufrichtungsgebunden ausgeführt sein.

### Bezugszeichenliste

- 1: halbmittiger Profilblock
- 1': mittiger Profilblock
- 1": schulterseitiger Profilblock
- 1a,1a': spitzwinkeliger Blockeckbereich
- 1b, 1b': spitzwinkeliger Blockeckbereich
- 1c, 1c': stumpfwinkeliger Blockeckbereich
- 1d, 1d', 1d": randseitiges Blocksegment
- 1e, 1e', 1e": mittleres Blocksegment
- 2: Querrille
- 2a: Iaufstreifeninnenseitiger Rillenabschnitt
- 2b: schulterseitiger Rillenabschnitt
- 3a: Rille
- 3b: Rille
- 4: Blockaußenfläche
- 5: einlaufende Blockkante
- 6: auslaufende Blockkante
- 7a, 7a', 7a": randseitiger Einschnitt
- 7b, 7b', 7b": mittlerer Einschnitt
- 7^{I}: radial innerer Einschnittabschnitt
- 7^{II}: radial äußerer Einschnittabschnitt
- 7^{III}: Übergangsabschnitt
- 8: Einschnittwand
- 9: Einschnittgrund
- 10, 10a, 10', 10": Zusatzeinschnitt
- 10a¹: Zusatzeinschnittabschnitt
- 11, 11', 11": Zusatzeinschnitt
- 12: Zusatzeinschnitt
- A-A: Linie (Reifenäquatorialebene)
- a₁, a_{E}, a_{E}', a_{E}", a_{Z}, a_{Z},', a_{Z}": Abstand
- b_{B}: maximale Blockbreite
- b_{E}, b_{R}, b_{Z}, b_{Z}": Breite
- E₁: randseitige Einschnittabfolge
- E₂: Einschnittabfolge
- E₃: mittlere Einschnittabfolge
- E₄: Einschnittabfolge
- E₅: Einschnittabfolge
- h₁: Hilfslinie
- L: Linie (seitlicher Rand der Bodenaufstandsfläche)
- m_{E}: Einschnittmittellinie
- M_{E}: Einschnittmittelfläche
- m_{QR}, m_{R}: Rillenmittellinie
- m_{Z}: Einschnittmittellinie
- R: Pfeil (Abrollrichtung)
- t₁: Tiefe
- t_{E}, t_{Z}, t_{Z}¹: maximale Tiefe
- T_{P}: Profiltiefe
- Z₃: Detail
- α, β, γ, δ, ε: Winkel
- η, η', η": Supplementwinkel

## Patentansprüche

1. Fahrzeugluftreifen mit einem Laufstreifen mit von Rillen (2, 3a, 3b) begrenzten mittleren Profilblöcken (1, 1') mit jeweils zumindest einem durchquerenden, den jeweiligen mittleren Profilblock (1, 1') in Blocksegmente (1d, 1d', 1e, 1e') gliedernden Einschnitt (7a, 7a', 7b, 7b'), welcher eine Breite (b_{E}) von 0,4 mm bis 1,2 mm und zumindest in einem in Draufsicht über einen Teil des Einschnitts (7a, 7a', 7b, 7b') reichenden Einschnittbereich eine maximale Tiefe (t_{E}) von 70% bis 100% der Profiltiefe (T_{P}) aufweist,
wobei mittlere Profilblöcke (1, 1') vorgesehen sind, in welchen jeweils zumindest eine in Draufsicht linienförmige Einschnittabfolge (E₁, E₂, E₃, E₄) aus zumindest zwei miteinander fluchtend verlaufenden Zusatzeinschnitten (10, 10a, 10', 11, 11', 12) mit einer Breite (bz) von 0,4 mm bis 1,2 mm ausgebildet ist, wobei die zur selben Einschnittabfolge (E₁, E₂, E₃, E₄) gehörenden Zusatzeinschnitte (10, 10a, 10', 11, 11', 12) in unmittelbar benachbarten Blocksegmenten (1d, 1d', 1e, 1e') ausgebildet sind und wobei die Zusatzeinschnitte (10, 10a, 10', 11, 11', 12) relativ zum im selben mittleren Profilblock (1, 1') befindlichen Einschnitt (7a, 7a', 7b, 7b') unter Supplementwinkeln (η, η') verlaufen, welche von 90° um bis zu 40° abweichen,
**dadurch gekenzeichnet,**
dass der Einschnitt (7a, 7a', 7b, 7b') zumindest im auf die maximale Tiefe (t_{E}) reichenden Einschnittbereich, im Querschnitt betrachtet, einen radial äußeren Einschnittabschnitt (7^{II}) aufweist, welcher zur radialen Richtung unter einem Winkel (ε) von 5° bis 25° verläuft, gegenüber der Laufstreifenperipherie in radialer Richtung eine Tiefe (t₁) aufweist und bis zur Laufstreifenperipherie reicht oder in einem zu dieser in radialer Richtung ermittelten Abstand (a₁) von höchstens 1,5 mm endet, wobei die Zusatzeinschnitte (10, 10a, 10', 11, 11', 12) eine maximale Tiefe (tz) aufweisen, welche mindestens 1,0 mm und höchstens der Tiefe (t₁) des radial äußeren Einschnittabschnitts (7^{II}) beträgt,
a) wobei zu den mittleren Profilblöcken (1, 1') mittige Profilblöcke (1'), insbesondere von der Reifenäquatorialebene (Linie A-A) geschnittene mittige Profilblöcke (1'), gehören, welche von zwei zu den Rillen (2, 3a, 3b) des Laufstreifens gehörenden, bezüglich der Umfangsrichtung gleichsinnig zueinander geneigten, nicht aneinander anschließenden Querrillen (2) mitbegrenzt sind, wobei die mittigen Profilblöcke (1') an den Querrillen (2) Blockkanten (5, 6) aufweisen, wobei die Einschnitte (7a', 7b'), in Draufsicht betrachtet, bezüglich der Umfangsrichtung gegensinnig zu den Blockkanten (5, 6) geneigt verlaufen, wobei die Zusatzeinschnitte (10', 11'), in Draufsicht betrachtet, bezüglich der Umfangsrichtung gegensinnig zu den Einschnitten (7a, 7b') geneigt verlaufen, und/oder
b) wobei zu den mittleren Profilblöcken (1, 1') halbmittige Profilblöcke (1) gehören, welche in Umfangsrichtung von zwei zu den Rillen (2, 3a, 3b) des Laufstreifens gehörenden, bezüglich der Umfangsrichtung gleichsinnig zueinander geneigten Querrillen (2) mitbegrenzt sind, wobei die halbmittigen Profilblöcke (1) an den Querrillen (2) Blockkanten (5, 6) aufweisen und wobei die Einschnitte (7a, 7b), in Draufsicht betrachtet, parallel oder im Wesentlichen parallel zu den Blockkanten (5, 6) verlaufen und die Zusatzeinschnitte (10, 10a, 11, 12), in Draufsicht betrachtet, bezüglich der Umfangsrichtung gegensinnig zu den Einschnitten (7a, 7b) geneigt verlaufen, wobei im Wesentlichen parallel zu den Blockkanten (5, 6) verlaufende Einschnitte (7a, 7b) zur axialen Richtung unter einem Winkel verlaufen, welcher vom Winkel, unter welchem die Blockkanten (5, 6) zur axialen Richtung verlaufen, um höchstens 5° abweicht.

2. Fahrzeugluftreifen nach Anspruch 1, **dadurch gekennzeichnet, dass** der Einschnitt (7a, 7a', 7b, 7b'), in Draufsicht betrachtet, zur axialen Richtung unter einem Winkel verläuft, welcher vorzugsweise 10° bis 60°, besonders bevorzugt bis zu 50°, beträgt und wobei die Zusatzeinschnitte (10, 10a, 10', 11, 11', 12), in Draufsicht betrachtet, zu dem Einschnitt (7a, 7a', 7b, 7b'), welcher im selben mittleren Profilblock (1, 1") ausgebildet ist, bezüglich der Umfangsrichtung gegensinnig geneigt verlaufen.

3. Fahrzeugluftreifen nach Anspruch 1 oder 2, **dadurch gekennzeichnet, dass** die maximale Tiefe (tz) der Zusatzeinschnitte (10, 10a, 10', 11, 11', 12) bis zu 2,0 mm beträgt.

4. Fahrzeugluftreifen nach einem der Ansprüche 1 bis 3, **dadurch gekennzeichnet, dass** die Tiefe (t₁) des radial äußeren Einschnittabschnitts (7^{II}) 2,5 mm bis 3,5 mm beträgt.

5. Fahrzeugluftreifen nach einem der Ansprüche 1 bis 4, **dadurch gekennzeichnet, dass** mittlere Profilblöcke (1, 1') vorgesehen sind, welche zumindest eine Einschnittabfolge (E₁, E₂, E₃, E₄) aus zumindest drei, insbesondere aus zumindest vier, Zusatzeinschnitten (10, 10a, 10', 11, 11', 12) aufweisen.

6. Fahrzeugluftreifen nach einem der Ansprüche 1 bis 5, **dadurch gekennzeichnet, dass** bei mittigen Profilblöcken (1') die Zusatzeinschnitte (10', 11') parallel oder im Wesentlichen parallel zu den Blockkanten (5, 6) verlaufen, wobei im Wesentlichen parallel zu den Blockkanten (5, 6) verlaufende Zusatzeinschnitte (10',11') zur axialen Richtung unter einem Winkel verlaufen, welcher vom Winkel, unter welchem die Blockkanten (5, 6) zur axialen Richtung verlaufen, um höchstens 5° abweicht.

7. Fahrzeugluftreifen nach einem der Ansprüche 1 bis 6, **dadurch gekennzeichnet, dass** die mittigen Profilblöcke (1') jeweils genau eine oder jeweils zwei Einschnittabfolge(n) (E₄) aus Zusatzeinschnitten (10', 11') aufweisen.

8. Fahrzeugluftreifen nach einem der Ansprüche 1 bis 7, **dadurch gekennzeichnet, dass** die halbmittigen Profilblöcke (1)jeweils drei bis acht, vorzugsweise vier bis sieben, besonders bevorzugt fünf oder sechs, Einschnittabfolgen (E₁, E₂, E₃) aus Zusatzeinschnitten (10, 10a, 11, 12) aufweisen.

9. Fahrzeugluftreifen nach einem der Ansprüche 1 bis 8, **dadurch gekennzeichnet, dass** der Laufstreifen laufrichtungsgebunden ausgeführt ist, wobei die mittigen Profilblöcke (1') bzw. die halbmittigen Profilblöcke (1) an den Querrillen (2) jeweils eine beim Abrollen des Reifens bei Vorwärtsfahrt zuerst in den Untergrund eintretende einlaufende Blockkante (5) und eine auslaufende Blockkante (6) aufweisen und wobei die mittigen Profilblöcke (1') bzw. die halbmittigen Profilblöcke (1) zwei einander gegenüberliegende spitzwinkelige Blockeckbereiche (1a, 1b, 1a', 1b') und zwei einander gegenüberliegende stumpfwinkelige Blockeckbereiche (1c, 1c') aufweisen,
wobei die Einschnitte (7a, 7b) in halbmittigen Profilblöcken (1) derart ausgeführt sind, dass der radial äußere Einschnittabschnitt (7^{II}) ausgehend von seinem radial inneren Ende zur einlaufenden Blockkante (5) geneigt ist und
wobei die Einschnitte (7a', 7b') in mittigen Profilblöcken (1') derart ausgeführt sind, dass der radial äußere Einschnittabschnitt (7^{II}) ausgehend von seinem radial inneren Ende zum einlaufenden spitzwinkligen Blockeckbereich (1a') geneigt ist.

10. Fahrzeugluftreifen nach einem der Ansprüche 1 bis 9, **dadurch gekennzeichnet, dass** der Laufstreifen schulterseitige Profilblöcke (1") aufweist, welche jeweils mit zumindest einem den jeweiligen schulterseitigen Profilblock (1") durchquerenden und diesen in Blocksegmente (1d", 1e") gliedernden Einschnitt (7a", 7b") versehen sind, welcher eine Breite (b_{E}) von 0,4 mm bis 1,2 mm und zumindest in einem in Draufsicht über einen Teil des Einschnitts (7a", 7b") reichenden Einschnittbereich eine maximale Tiefe (t_{E}) von 70% bis 100% der Profiltiefe (T_{P}) aufweist, wobei die Einschnitte (7a", 7b") zumindest im auf die maximale Tiefe (t_{E}) reichenden Einschnittbereich, im Querschnitt betrachtet, einen radial äußeren Einschnittabschnitt aufweisen, welcher zur radialen Richtung unter einem Winkel von 5° bis 25° verläuft, bis zur Laufstreifenperipherie reicht oder in einem zu dieser in einem radialer Richtung ermittelten Abstand von höchstens 1,5 mm endet,
wobei schulterseitige Profilblöcke (1") vorgesehen sind, welche jeweils zumindest eine in Draufsicht linienförmig verlaufende Einschnittabfolge (E₅) aus zumindest zwei miteinander fluchtend verlaufenden mikrorillenartigen Zusatzeinschnitten (10", 11") mit einer Breite (bz") von 0,4 mm bis 1,2 mm, vorzugsweise von bis zu 0,6 mm, und einer in radialer Richtung ermittelten konstanten Tiefe von 0,4 mm bis 1,2 mm, insbesondere von bis zu 1,0 mm, aufweisen, wobei die jeweils zur selben Einschnittabfolge (Es) gehörenden mikrorillenartigen Zusatzeinschnitte (10", 11") in unmittelbar benachbarten Blocksegmenten (1d", 1e") ausgebildet sind und wobei die mikrorillenartigen Zusatzeinschnitte (10", 11") relativ zum im selben schulterseitigen Profilblock (1") befindlichen Einschnitt (7a", 7b") unter Supplementwinkeln (η") verlaufen, welche von 90° um bis zu 40° abweichen.

11. Fahrzeugluftreifen nach Anspruch 10, **dadurch gekennzeichnet, dass** die Zusatzeinschnitte (10", 11") in Draufsicht betrachtet, bezüglich der Umfangsrichtung gleichsinnig zu den Einschnitten (7a", 7b") geneigt verlaufen.

12. Fahrzeugluftreifen nach einem der Ansprüche 1 bis 11, **dadurch gekennzeichnet, dass** der Winkel (ε), unter welchem der radial äußere Einschnittabschnitt (7^{II}) verläuft, 10° bis 20° beträgt.

13. Fahrzeugluftreifen nach einem der Ansprüche 1 bis 12, **dadurch gekennzeichnet, dass** der Abstand (a₁), in welchem der radial äußere Einschnittabschnitt (7^{II}) zur Laufstreifenperipherie endet, mindestens 0,3 mm beträgt.

## Claims

1. Pneumatic vehicle tyre having a tread with middle profile blocks (1, 1') which are delimited by channels (2, 3a, 3b) and which have in each case at least one through-crossing sipe (7a, 7a', 7b, 7b'), the latter dividing the respective middle profile block (1, 1') into block segments (1d, 1d', 1e, 1e') and having a width (b_{E}) of 0.4 mm to 1.2 mm and, at least in a sipe region extending over a part of the sipe (7a, 7a', 7b, 7b') in plan view, a maximum depth (t_{E}) of 70% to 100% of the profile depth (T_{P}),
wherein provision is made of middle profile blocks (1, 1') in which there is formed in each case at least one sipe sequence (E₁, E₂, E₃, E₄) which is linear in plan view and is composed of at least two additional sipes (10, 10a, 10', 11, 11', 12) extending aligned with one another and having a width (b_{z}) of 0.4 mm to 1.2 mm, wherein the additional sipes (10, 10a, 10', 11, 11', 12) belonging to the same sipe sequence (E₁, E₂, E₃, E₄) are formed in directly adjacent block segments (1d, 1d', 1e, 1e'), and wherein the additional sipes (10, 10a, 10', 11, 11', 12), relative to the sipe (7a, 7a', 7b, 7b') situated in the same middle profile block (1, 1'), extend at supplementary angles (η, η') which differ from 90° by up to 40°,
**characterized**
**in that**, at least in the sipe region extending to the maximum depth (t_{E}), when viewed in cross section, the sipe (7a, 7a', 7b, 7b') has a radially outer sipe portion (7^{II}) which extends at an angle (ε) of 5° to 25° to the radial direction, has a depth (t₁) in the radial direction in relation to the tread periphery, and extends as far as the tread periphery or ends at a distance (a₁) determined in the radial direction in relation thereto of at most 1.5 mm, wherein the additional sipes (10, 10a, 10', 11, 11', 12) have a maximum depth (tz) of at least 1.0 mm and at most the depth (t₁) of the radially outer sipe portion (7^{II}),
a) wherein the middle profile blocks (1, 1') include central profile blocks (1'), in particular central profile blocks (1') intersected by the tyre equatorial plane (line A-A), which are jointly delimited by two transverse channels (2) belonging to the channels (2, 3a, 3b) of the tread and inclined in the same direction with respect to one another in relation to the circumferential direction and not adjoining one another, wherein the central profile blocks (1') have block edges (5, 6) on the transverse channels (2), wherein the sipes (7a', 7b'), when seen in plan view, extend in a manner inclined in the opposite direction with respect to the block edges (5, 6) in relation to the circumferential direction, wherein the additional sipes (10', 11'), when seen in plan view, extend in a manner inclined in the opposite direction with respect to the sipes (7a, 7b') in relation to the circumferential direction, and/or
b) wherein the middle profile blocks (1, 1') include semi-central profile blocks (1) which are jointly delimited in the circumferential direction by two transverse channels (2) belonging to the channels (2, 3a, 3b) of the tread and inclined in the same direction with respect to one another in relation to the circumferential direction, wherein the semi-central profile blocks (1) have block edges (5, 6) on the transverse channels (2), and wherein the sipes (7a, 7b), when seen in plan view, extend parallel or substantially parallel to the block edges (5, 6) and the additional sipes (10, 10a, 11, 12), when seen in plan view, extend in a manner inclined in the opposite direction with respect to the sipes (7a, 7b) in relation to the circumferential direction, wherein sipes (7a, 7b) extending substantially parallel to the block edges (5, 6) extend at an angle to the axial direction that differs from the angle at which the block edges (5, 6) extend to the axial direction by at most 5°.

2. Pneumatic vehicle tyre according to Claim 1, **characterized in that** the sipe (7a, 7a', 7b, 7b'), when seen in plan view, extends at an angle to the axial direction that is preferably 10° to 60°, particularly preferably up to 50°, and wherein the additional sipes (10, 10a, 10', 11, 11', 12), when seen in plan view, extend in a manner inclined in the opposite direction with respect to the sipe (7a, 7a', 7b, 7b') formed in the same profile block (1, 1") in relation to the circumferential direction.

3. Pneumatic vehicle tyre according to Claim 1 or 2, **characterized in that** the maximum depth (tz) of the additional sipes (10, 10a, 10', 11, 11', 12) is up to 2.0 mm.

4. Pneumatic vehicle tyre according to one of Claims 1 to 3, **characterized in that** the depth (t₁) of the radially outer sipe portion (7^{II}) is 2.5 mm to 3.5 mm.

5. Pneumatic vehicle tyre according to one of Claims 1 to 4, **characterized in that** provision is made of middle profile blocks (1, 1') which have at least one sipe sequence (E₁, E₂, E₃, E₄) composed of at least three, in particular of at least four, additional sipes (10, 10a, 10', 11, 11', 12).

6. Pneumatic vehicle tyre according to one of Claims 1 to 5, **characterized in that**, with central profile blocks (1'), the additional sipes (10', 11') extend parallel or substantially parallel to the block edges (5, 6), wherein additional sipes (10',11') extending substantially parallel to the block edges (5, 6) extend at an angle to the axial direction that differs from the angle at which the block edges (5, 6) extend to the axial direction by at most 5°.

7. Pneumatic vehicle tyre according to one of Claims 1 to 6, **characterized in that** the central profile blocks (1') have in each case exactly one or in each case two sipe sequence(s) (E₄) composed of additional sipes (10', 11').

8. Pneumatic vehicle tyre according to one of Claims 1 to 7, **characterized in that** that the semi-central profile blocks (1) have in each case three to eight, preferably four to seven, particularly preferably five or six, sipe sequences (E₁, E₂, E₃) composed of additional sipes (10, 10a, 11, 12).

9. Pneumatic vehicle tyre according to one of Claims 1 to 8, **characterized in that** the tread is of directional design, wherein the central profile blocks (1') or the semi-central profile blocks (1) have at the transverse channels (2) in each case a leading block edge (5), which meets the ground first when the tyre rolls during forward travel, and a trailing block edge (6), and wherein the central profile blocks (1') or the semi-central profile blocks (1) have two mutually oppositely situated acute-angled block corner regions (1a, 1b, 1a', 1b') and two mutually oppositely situated obtuse-angled block corner regions (1c, 1c'),
wherein the sipes (7a, 7b) in semi-central profile blocks (1) are formed in such a way that, proceeding from its radially inner end, the radially outer sipe portion (7^{II}) is inclined towards the leading block edge (5), and
wherein the sipes (7a', 7b') in semi-central profile blocks (1') are formed in such a way that, proceeding from its radially inner end, the radially outer sipe portion (7^{II}) is inclined towards the leading acute-angled block corner region (1a').

10. Pneumatic vehicle tyre according to one of Claims 1 to 9, **characterized in that** the tread has shoulder-side profile blocks (1") in each case provided with at least one sipe (7a", 7b") which crosses through the respective shoulder-side profile block (1") and which divides the latter into block segments (1d", 1e") and which has a width (b_{E}) of 0.4 mm to 1.2 mm and, at least in a sipe region extending over a part of the sipe (7a", 7b") in plan view, a maximum depth (t_{E}) of 70% to 100% of the profile depth (T_{P}), wherein, at least in the sipe region extending to the maximum depth (t_{E}), when viewed in cross section, the sipes (7a", 7b") have a radially outer sipe portion which extends at an angle of 5° to 25° to the radial direction and extends as far as the tread periphery or ends at a distance determined in the radial direction in relation thereto of at most 1.5 mm,
wherein provision is made of shoulder-side profile blocks (1") which have in each case at least one sipe sequence (Es) which extends linearly in plan view and is composed of at least two microchannel-like additional sipes (10", 11") extending aligned with one another and having a width (b_{z}") of 0.4 mm to 1.2 mm, preferably of up to 0.6 mm, and a constant depth, determined in a radial direction, of 0.4 mm to 1.2 mm, in particular of up to 1.0 mm, wherein the microchannel-like additional sipes (10", 11") belonging in each case to the same sipe sequence (Es) are formed in directly adjacent block segments (1d", 1e"), and wherein the microchannel-like additional sipes (10", 11"), relative to the sipe (7a", 7b") situated in the same shoulder-side profile block (1"), extend at supplementary angles (η") which differ from 90° by up to 40°.

11. Pneumatic vehicle tyre according to Claim 10, **characterized in that** the additional sipes (10", 11"), when seen in plan view, extend in a manner inclined in the same direction with respect to the sipes (7a", 7b") in relation to the circumferential direction.

12. Pneumatic vehicle tyre according to one of Claims 1 to 11, **characterized in that** the angle (ε) at which the radially outer sipe portion (7^{II}) extends is 10° to 20°.

13. Pneumatic vehicle tyre according to one of Claims 1 to 12, **characterized in that** the distance (a₁) at which the radially outer sipe portion (7^{II}) ends from the tread periphery is at least 0.3 mm.

## Revendications

1. Pneumatique pour véhicule, comprenant une bande de roulement avec des blocs profilés centraux (1, 1') délimités par des rainures (2, 3a, 3b), chacun d'eux présentant au moins une entaille transversale (7a, 7a', 7b, 7b'), structurant le bloc profilé central respectif (1, 1') en des segments de bloc (1d, 1d', 1e, 1e'), qui présente une largeur (b_{E}) de 0,4mm à 1,2mm et, au moins dans une zone d'entaillage s'étendant en vue de dessus sur une partie de l'entaille (7a, 7a', 7b, 7b'), une profondeur maximale (t_{E}) de 70% à 100% de la profondeur de profil (T_{P}), des blocs profilés centraux (1, 1') étant prévus, dans chacun desquels est formée au moins une séquence d'entailles (E₁, E₂, E₃, E₄) linéaire en vue de dessus, constituée d'au moins deux entailles supplémentaires (10, 10a, 10', 11, 11', 12) alignées entre elles, ayant une largeur (bz) de 0,4mm à 1,2mm, les entailles supplémentaires (10, 10a, 10', 11, 11', 12) qui appartiennent à la même séquence d'entailles (E₁, E₂, E₃, E₄) étant formées dans des segments de blocs (1d, 1d', 1e, 1e') immédiatement adjacents, et les entailles supplémentaires (10, 10a, 10', 11, 11', 12), par rapport à l'entaille (7a, 7a', 7b, 7b') située dans le même bloc profilé central (1, 1'), s'étendant selon des angles supplémentaires (η, η') qui s'écartent de 90° jusqu'à 40°,
**caractérisé**
**en ce que** l'entaille (7a, 7a', 7b, 7b') comprend, au moins dans la zone d'entaille atteignant la profondeur maximale (t_{E}), vue en coupe transversale, une partie d'entaille radialement extérieure (7^{II}), qui s'étend dans la direction radiale selon un angle (ε) de 5° à 25°, comprend une profondeur (t₁) dans le sens radial par rapport à la périphérie de la bande de roulement et s'étend jusqu'à la périphérie de la bande de roulement, ou se termine à une distance (a₁) de celle-ci, dans la direction radiale, d'au plus 1,5mm, les entailles supplémentaires (10, 10a, 10', 11, 11', 12) comprenant une profondeur maximale (tz) qui est d'au moins 1,0mm et au maximum de la profondeur (t₁) de la section d'entaille radialement extérieure (7^{II}),
a) les blocs profilés centraux (1'), en particulier les blocs profilés centraux (1') coupés dans le plan équatorial du pneu (ligne A-A), appartiennent aux blocs profilés centraux (1, 1'), qui sont délimités par deux rainures transversales (2) non adjacentes appartenant aux rainures (2, 3a, 3b) de la bande de roulement, qui sont inclinées dans la même direction circonférentielle l'une par rapport à l'autre, les blocs profilés centraux (1') comprenant des arêtes de bloc (5, 6) sur les rainures transversales (2), les entailles (7a', 7b'), en vue de dessus, étant inclinées dans la direction circonférentielle dans la direction opposée aux bords des blocs (5, 6), les entailles supplémentaires (10', 11'), vues de dessus, étant inclinées dans la direction circonférentielle dans la direction opposée aux entailles (7a, 7b'), et/ou
b) des blocs profilés semi-centraux (1) appartenant aux blocs profilés centraux (1, 1') sont délimités dans la direction circonférentielle par deux rainures transversales (2) appartenant aux rainures (2, 3a, 3b) de la bande de roulement, inclinées dans la même direction par rapport à la direction circonférentielle, les blocs profilés semi-centraux (1) comprenant des arêtes de bloc (5, 6) au niveau des rainures transversales (2), et les entailles (7a, 7b), vues de dessus, sont parallèles, ou sensiblement parallèles, aux arêtes des blocs (5, 6), et les entailles supplémentaires (10, 10a, 11, 12), vues de dessus, sont inclinées dans la direction opposée aux entailles (7a, 7b), les entailles (7a, 7b) qui sont sensiblement parallèles aux bords du bloc (5, 6) par rapport à la direction axiale formant un angle qui diffère de 5° au maximum de l'angle que forment les bords du bloc (5, 6) par rapport à la direction axiale.

2. Pneumatique pour véhicule selon la revendication 1, **caractérisé en ce que** l'entaille (7a, 7a', 7b, 7b'), vue de dessus, s'étend dans la direction axiale selon un angle qui est de préférence compris entre 10° et 60°, de préférence jusqu'à 50°, et dans lequel les entailles supplémentaires (10, 10a, 10', 11, 11', 12), vues de dessus, sont inclinées dans des directions opposées par rapport à la direction circonférentielle par rapport à l'entaille (7a, 7a', 7b, 7b') qui est formée dans le même bloc profilé central (1, 1").

3. Pneumatique pour véhicule selon la revendication 1 ou la revendication 2, **caractérisé en ce que** la profondeur maximale (tz) des entailles supplémentaires (10, 10a, 10', 11, 11', 12) peut atteindre 2,0mm.

4. Pneumatique pour véhicule selon l'une des revendications 1 à 3, **caractérisé en ce que** la profondeur (t₁) de la partie d'entaille radialement extérieure (7^{II}) est comprise entre 2,5mm et 3,5mm.

5. Pneumatique pour véhicule selon l'une des revendications 1 à 4, **caractérisé en ce qu'**il est prévu des blocs profilés centraux (1, 1') qui présentent au moins une séquence d'entailles (E₁, E₂, E₃, E₄) constituée par au moins trois, en particulier au moins quatre, entailles supplémentaires (10, 10a, 10', 11, 11', 12).

6. Pneumatique pour véhicule selon l'une des revendications 1 à 5, **caractérisé en ce que**, dans le cas de blocs profilés centraux (1'), les entailles supplémentaires (10', 11') s'étendent parallèlement ou sensiblement parallèlement aux bords des blocs (5, 6), les entailles supplémentaires (10', 11') sensiblement parallèles aux bords des blocs (5, 6) s'étendant dans la direction axiale selon un angle qui diffère de 5° au maximum de l'angle selon lequel les bords des blocs (5, 6) s'étendent dans la direction axiale.

7. Pneumatique pour véhicule selon l'une des revendications 1 à 6, **caractérisé en ce que** les blocs profilés centraux (1') comprennent chacun exactement une séquence d'entailles, ou deux séquences d'entailles (E₄) respectives, constituées d'entailles supplémentaires (10', 11').

8. Pneumatique pour véhicule selon l'une des revendications 1 à 7, **caractérisé en ce que** les blocs profilés semi-centraux (1) comprennent chacun trois à huit, de préférence quatre à sept, de manière particulièrement préférée cinq ou six, séquences d'entailles (E₁, E₂, E₃) constituées d'entailles supplémentaires (10, 10a, 11, 12).

9. Pneumatique pour véhicule selon l'une des revendications 1 à 8, **caractérisé en ce que** la bande de roulement est directionnelle, les blocs profilés centraux (1') ou les blocs profilés semi-centraux (1) au niveau des rainures transversales (2) présentent chacun une arête de bloc (5) qui entre en premier en contact avec le sol lors du roulage du pneumatique en marche avant et une arête de bloc (6) qui quitte le sol, et les blocs profilés centraux (1') ou les blocs profilés semi-centraux (1) présentent deux zones d'angles de blocs opposées à angle aigu (1a, 1b, 1a', 1b') et deux zones d'angles de blocs opposées à angle obtus (1c, 1c'),
les entailles (7a, 7b) dans les blocs profilés semi-centraux (1) étant réalisées de telle sorte que la partie d'entaille radialement extérieure (7^{II}) soit inclinée depuis son extrémité radialement intérieure vers l'arête d'attaque du bloc (5), et
les entailles (7a', 7b') dans les blocs profilés centraux (1') étant réalisées de telle sorte que la partie d'entaille radialement extérieure (7^{II}) soit inclinée depuis son extrémité radialement intérieure vers la zone d'angle de bloc à angle aigu rentrant (1a').

10. Pneumatique pour véhicule selon l'une des revendications 1 à 9, **caractérisé en ce que** la bande de roulement comprend des blocs profilés (1") du côté épaulement, qui sont chacun munis d'au moins une entaille (7a", 7b") traversant le bloc profilé (1") du côté épaulement respectif et divisant celui-ci en segments de bloc (1d", 1e") qui ont une largeur (b_{E}) de 0,4mm à 1,2mm et, au moins dans une zone d'entaillage qui, vue de dessus, s'étend sur une partie de l'entaille (7a", 7b"), une profondeur maximale (t_{E}) de 70% à 100% de la profondeur du profil (T_{P}), les entailles (7a", 7b") au moins dans la zone d'entaillage allant jusqu'à la profondeur maximale (t_{E}), présentent, en coupe transversale, une section d'entaille radialement extérieure qui s'étend dans la direction radiale selon un angle de 5° à 25°, jusqu'à la périphérie de la bande de roulement ou se termine à une distance de celle-ci d'au plus 1,5mm dans une direction radiale,
des blocs profilés (1") étant prévus du côté de l'épaulement, qui présentent chacun au moins une séquence d'entailles (Es) s'étendant en ligne en vue de dessus, constituée d'au moins deux entailles supplémentaires (10", 11") de type micro-rainures alignées l'une avec l'autre, d'une largeur (bz") de 0,4mm à 1,2mm, de préférence jusqu'à 0,6mm, et une profondeur constante de 0,4mm à 1,2mm, en particulier jusqu'à 1,0mm, déterminée dans le sens radial, les entailles supplémentaires en forme de micro-rainures (10", 11") appartenant à la même séquence d'entailles (ES) étant aménagées dans des segments de blocs directement adjacents (1d", 1e") et les entailles supplémentaires en forme de micro-rainures (10", 11") s'étendant par rapport à l'entaille (7a", 7b") située dans le même bloc profilé (1") côté épaulement selon des angles supplémentaires (η") qui divergent de 90° jusqu'à 40°.

11. Pneumatique pour véhicule selon la revendication 10, **caractérisé en ce que** les entailles supplémentaires (10", 11"), vues de dessus, sont inclinées dans le même sens que les entailles (7a", 7b") par rapport à la direction circonférentielle.

12. Pneumatique pour véhicule selon l'une des revendications 1 à 11, **caractérisé en ce que** l'angle (ε) selon lequel s'étend la section d'entaillage radialement extérieure (7^{II}) est compris entre 10° et 20°.

13. Pneumatique pour véhicule selon l'une des revendications 1 à 12, **caractérisé en ce que** la distance (a₁) à laquelle la partie d'entaille radialement extérieure (7^{II}) se termine par la périphérie de la bande de roulement est d'au moins 0,3mm.
